# EUROPEAN PATENT SPECIFICATION

(11) **EP 1 820 973 B1**
(45) Date of publication and mention of the grant of the patent: **27.04.2011**
(21) Application number: 06425097.0
(22) Date of filing: 17.02.2006
(51) Int. Cl.: F15B 15/14, F16H 61/30

(54) **Hydraulic actuator for a servo of a gear change and corresponding method of fabrication**
Hydraulischer Aktuator für einen Servomotor zum Schalten von Gängen und zugehöriges Herstellungsverfahren
Actionneur hydraulique pour servomoteur pour changement de vitesse et procédé de fabrication correspondant

(43) Date of publication of application: 22.08.2007
(73) Proprietor: Magneti Marelli S.p.A., Corbetta (MI) (IT)
(72) Inventor: Lorenzoni, Marcello, 40132 Bologna (IT); Mengoli, Nerio, 40033 Casalecchio di Reno (IT); Giorgini, Stefano, 40061 Minerbio (IT)
(74) Representative: Jorio, Paolo

(56) References cited:
- DE-A1- 10 005 236
- DE-A1- 10 033 807
- FR-A- 2 868 486
- US-B1- 6 363 833

## Description

### TECHNICAL FIELD

The present invention relates to a hydraulic actuator for a servo of a gear change and to a corresponding method of fabrication.

### BACKGROUND ART

There is an increasingly widespread use of servo-assisted gear changes, which are structurally similar to a manual gear change of a traditional type but for the fact that the clutch pedal and the gear lever operated by the driver are replaced by corresponding electrical or hydraulic servos. Using a manual servo-assisted gear change, the driver only has to issue the order to pass to a higher gear or else to a lower gear to a transmission control unit, and the transmission control unit autonomously carries out gear change by acting both on the engine and on the servos associated to the clutch and gear change.

An order for change of gear can be generated manually, i.e., following upon a command imparted by the driver, or else automatically, i.e., independently of the action of the driver. When the order for performing a change of gear is generated, the transmission control unit drives the clutch servo for opening the clutch so as to separate a primary shaft of the gear change mechanically from an engine shaft. At the same time, the transmission control unit acts on the engine control unit in order to reduce temporarily the driving torque supplied by the engine .

Once the transmission control unit has verified opening of the clutch, it drives the gear-change servo to disengage the gear currently engaged. When the transmission control unit has verified disengagement of the gear, it drives the gear-change servo for displacing the gear-change control shaft so as to enable engagement of the new gear. Once the transmission control unit has verified that the primary shaft has reached the desired position with respect to the secondary shaft, it drives the gear-change servo for engaging the new gear.

Finally, when the transmission control unit has verified engagement of the new gear, it drives the clutch servo for closing the clutch so as to render the primary shaft of the gear change and the engine shaft angularly fixed to one another. At the same time, the transmission control unit acts on the engine control unit for restoring the driving torque supplied by the engine .

Generally, the gear-change servo is of a hydraulic type and acts on a gear-change control shaft to impress on the control shaft both an axial displacement, i.e., along an axis of symmetry, for selecting the range of the gears, and a rotation about the axis of symmetry for engaging and disengaging the individual gears. Consequently, the gear-change servo comprises a first hydraulic actuator, mechanically coupled to the control shaft for axial displacement of the control shaft, and a second hydraulic actuator, mechanically coupled to the control shaft for rotating the control shaft .

In the first servos produced, the two hydraulic actuators were both directly coupled to the control shaft, and acted independently on the control shaft. However, said constructional solution is cumbersome; for said reason an alternative embodiment has been proposed, in which the first hydraulic actuator is directly coupled to the control shaft for displacing the control shaft axially, whilst the second hydraulic actuator is coupled to a cam engaged by a pin fixed to the control shaft so as to render the cam angularly fixed to a fixed frame. When the cam is angularly fixed to the fixed frame, then the axial displacement of the control shaft forces the control shaft to perform a rotation as a result of the mechanical coupling between the pin and the cam , whereas, when the cam is not angularly fixed to the fixed frame, then the axial displacement of the control shaft brings about a rotation of the cam and not of the control shaft. Such a servo is known from DE 100 33 807 A.

It has been proposed to set the first hydraulic actuator around an intermediate portion of the control shaft. In this solution, the first hydraulic actuator has two chambers, which are alternatively filled with a pressurized fluid for displacing the control shaft axially in the two directions, are traversed by the control shaft, are set in series along the control shaft, and are separated from one another by a flange, which is fixed to the control shaft and defines a piston of the hydraulic actuator. In known hydraulic actuators, the flange is monolithic with the control shaft, and is obtained by milling the control shaft , which entails removal of material. However, said machining is particularly long and expensive, in so far as from a rough piece, more than 50% of the material must be removed to obtain the finished control shaft integrating the flange.

### DISCLOSURE OF INVENTION

The aim of the present invention is to provide a hydraulic actuator for a servo of a gear change and a corresponding method of fabrication which will be free from of the drawbacks described above and, in particular, will be simple and inexpensive to provide.

According to the present invention a hydraulic actuator for a servo of a gear change and a corresponding method of fabrication are provided according to what is recited in the annexed claims.

### BRIEF DESCRIPTION OF THE DRAWINGS

The present invention will now be described with reference to the annexed plate of drawings, which illustrates a nonlimiting example of embodiment thereof, and in which:
- Figure 1 is a schematic cross-sectional view, with parts removed for reasons of clarity, of a servo built in accordance with the present invention;
- Figure 2 is a view at an enlarged scale of a hydraulic actuator of the servo of Figure 1;
- Figure 3 is a view at an enlarged scale of a detail of the hydraulic actuator of Figure 2; and
- Figure 4 is an exploded perspective view of a further detail of the hydraulic actuator of Figure 2.

### PREFERRED EMBODIMENTS OF THE INVENTION

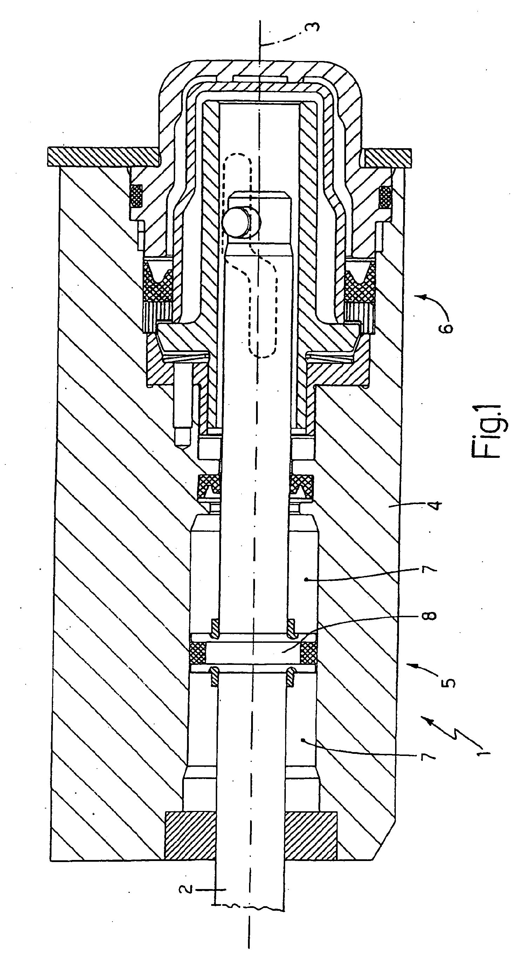

In Figure 1, the reference number 1 designates as a whole a servo for a gear change, which is provided with a control shaft 2. The servo 1 acts on the control shaft 2 of the gear change to impress on the control shaft 2 both an axial displacement, i.e., along a central axis 3, for selecting the range of the gears, and a rotation about the central axis 3, for engaging and disengaging the individual gears. The servo 1 of the gear change comprises a fixed frame 4, which is traversed by the control shaft 2 and supports a first hydraulic actuator 5, mechanically coupled to the control shaft 2 for displacing the control shaft 2 axially, and a second hydraulic actuator 6, mechanically coupled to the control shaft 2 for rotating the control shaft 2 about the central axis 3.

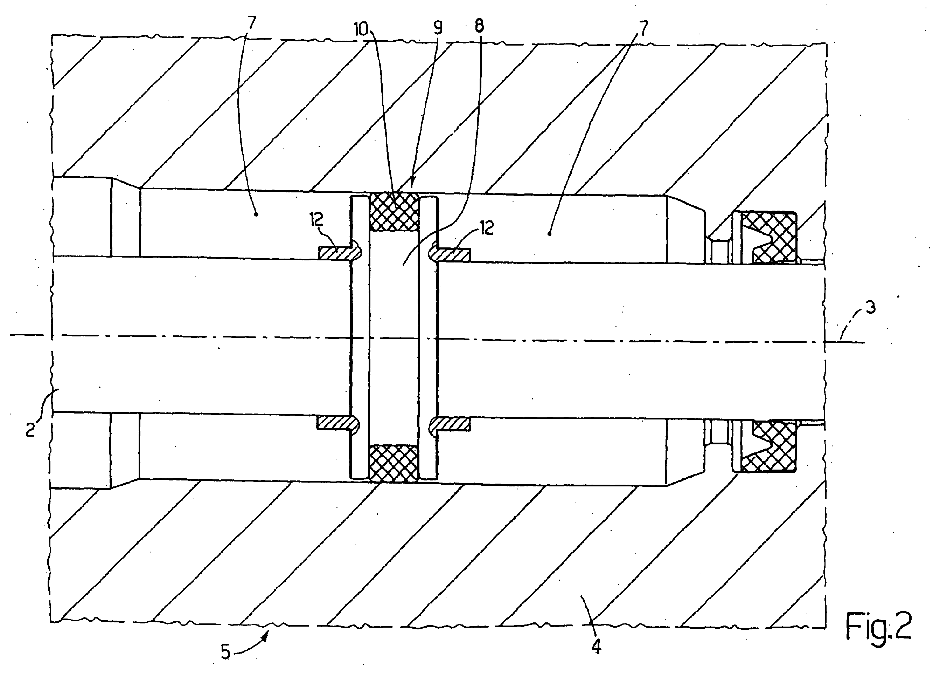

According to what is illustrated in Figure 2, the first actuator 5 is set in a position corresponding to an intermediate portion of the control shaft 2 and has two chambers 7, which are alternatively filled with a pressurized fluid for displacing the control shaft 2 axially in the two directions under the control of a pair of solenoid valves (not illustrated). In particular, the two chambers 7 are traversed by the control shaft 2, are set in series along the control shaft 2, and are separated from one another by a flange 8, which is fixed to the control shaft 2 and defines a piston of the first hydraulic actuator 5. The flange 8 comprises a central annular cavity 9, which receives an annular seal gasket 10.

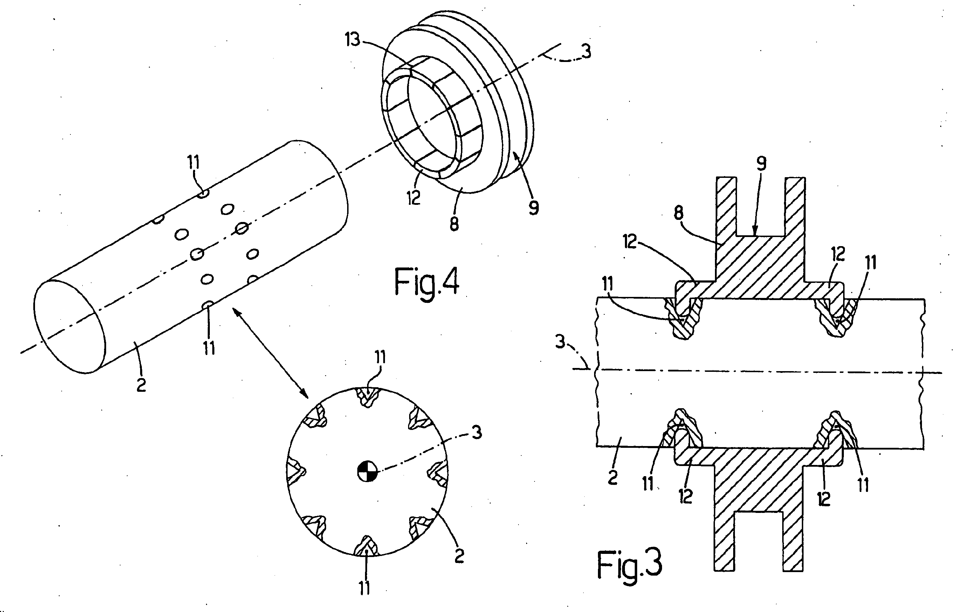

According to what is illustrated in Figures 3 and 4, the flange 8 is independent of the control shaft 2 and is fitted on the control shaft 2 . In order to provide a sufficiently fixed mechanical connection between the flange 8 and the control shaft 2, the control shaft 2 comprises two rows of seats 11, which are uniformly distributed along respective circumferences and about the central axis 3 of the control shaft 2, and the flange 8 comprises a pair of lateral lips 12, each of which is set above a row of seats 11 and undergoes deformation in a position corresponding to each seat 11 in order to engage the seat 11 . In particular, the two lateral lips 12 of the flange 8 are arranged on opposite sides of the flange 8 in a position corresponding to the respective rows of seats 11.

Preferably, each seat 11 has a triangular cross section (i.e., a conical shape) and each lateral lip 12 has notches 13 arranged parallel to the central axis 3 of the control shaft 2; the function of the notches 13 is to facilitate deformation of each lateral lip 12 preventing any splitting or in any case damage to the lateral lip 12 .

According to a preferred embodiment, the control shaft 2 is made of a first material, and the flange 8 is made of a second material different from the first material and more malleable than the first material. For example, the first material could be steel, and the second material could be aluminium. Using two different materials for providing the control shaft 2 and the flange 8, it is to possible guarantee a high mechanical strength of the ensemble, at the same time simplifying construction of the ensemble .

According to a preferred embodiment, each lateral lip 12 has a thickness measured in a direction perpendicular to the central axis 3 of the control shaft 2 comprised between 0.5 and 1.0 mm and has a length measured in a direction parallel to the central axis 3 of the control shaft 2 comprised between 0.5 and 1.0 mm.

According to a different embodiment (not illustrated), the flange 8 comprises a single lip 12, and the control shaft 2 has a single row of seats 11.

From what has been set forth above, it is clear that, in order to provide the ensemble formed by the control shaft 2 and by the flange 8, the control shaft 2 is initially made separately from the flange 8, and the flange 8 is made separately from the control shaft 2 and is provided with the two lateral lips 12. Next, on the control shaft 2, the two rows of seats 11 are made, and then the flange 8 is fitted on the control shaft 2 so as to set each lateral lip 12 of the flange 8 above a row of seats 11 of the control shaft 2. Finally, each lateral lip 12 of the flange 8 is mechanically deformed in a position corresponding to each seat 11 in order to engage the seat 11 .

The ensemble described above formed by the control shaft 2 and by the flange 8 is particularly fast and inexpensive to produce, in so far as removal of material by milling is reduced to the basic minimum. In fact, the control shaft 2 can be obtained using a rough piece having a diameter only slightly larger than the diameter of the finished control shaft 2 irrespective of the diameter of the flange 8. In addition, the system described above of mechanical connection between the control shaft 2 and the flange 8 is simple and fast to obtain and guarantees, at the same time, a high mechanical strength and a good constructional precision.

## Claims

1. A hydraulic actuator (5) for a servo of a gear change provided with a control shaft (2); the hydraulic actuator (5) displacing the control shaft (2) axially along a central axis (3) thereof, being set in a position corresponding to an intermediate portion of the control shaft (2), and having two chambers (7), which are alternatively filled with a pressurized fluid for displacing the control shaft (2) axially in the two directions, are traversed by the control shaft (2), are set in series along the control shaft (2), and are separated from one another by a flange (8), which is fixed to the control shaft (2) and defines a piston of the hydraulic actuator (5); the hydraulic actuator (5) is **characterized in that:**
the flange (8) is independent of the control shaft (2) and is fitted on the control shaft (2) ;
the control shaft (2) comprises at least one row of seats (11), which are uniformly distributed along a circumference and around the central axis (3) of the control shaft (2) ; and
the flange (8) comprises at least one lateral lip (12), which is set above the row of seats (11) and is deformed in a position corresponding to each seat (11) in order to engage the seat (11) .

2. The hydraulic actuator (5) according to Claim 1, wherein the control shaft (2) comprises two rows of seats (11), and the flange (8) comprises two lateral lips (12), which are arranged on opposite sides of the flange (8) in a position corresponding to the respective rows of seats (11).

3. The hydraulic actuator (5) according to Claim 1 or Claim 2, wherein each seat (11) has a triangular cross section.

4. The hydraulic actuator (5) according to Claim 1 or Claim 2 or Claim 3, wherein each lateral lip (12) has notches (13) arranged parallel to the central axis (3) of the control shaft (2).

5. The hydraulic actuator (5) according to any one of Claims 1 to 4, wherein the control shaft (2) is made of a first material and the flange (8) is made of a second material different from the first material.

6. The hydraulic actuator (5) according to Claim 5, wherein the second material is more malleable than the first material.

7. The hydraulic actuator (5) according to Claim 6, wherein the first material is steel and the second material is aluminium.

8. The hydraulic actuator (5) according to any one of Claims 1 to 7, wherein each lateral lip (12) has a thickness measured in a direction perpendicular to the central axis (3) of the control shaft (2) comprised between 0.5 and 1.0 mm and has a length measured in a direction parallel to the central axis (3) of the control shaft (2) comprised between 0.5 and 1.0 mm.

9. The hydraulic actuator (5) according to any one of Claims 1 to 8, wherein the flange (8) comprises a central annular cavity (9) designed to receive an annular seal gasket (10).

10. A method for production of a hydraulic actuator (5) for a servo of a gear change provided with a control shaft (2); the hydraulic actuator (5) displacing the control shaft (2) axially along a central axis (3) thereof, being set in a position corresponding to an intermediate portion of the control shaft (2), and having two chambers (7), which are alternatively filled with a pressurized fluid for displacing the control shaft (2) axially in the two directions, are traversed by the control shaft (2), are set in series along the control shaft (2), and are separated from one another by a flange (8), which is fixed to the control shaft (2) and defines a piston of the hydraulic actuator (5);
the method is **characterized in that** it comprises the steps of:
making the control shaft (2) separately from the flange (8);
making in the control shaft (2) at least one row of seats (11), which are uniformly distributed along a circumference and around the central axis (3) of the control shaft (2);
making the flange (8) separately from the control shaft (2) and providing it with at least one lateral lip (12);
fitting the flange (8) on the control shaft (2) so as to provide the lateral lip (12) of the flange (8) above the row of seats (11) of the control shaft (2); and
deforming the lateral lip (12) of the flange (8) in a position corresponding to each seat (11) in order to engage the seat (11) .

11. The method according to Claim 10, wherein the control shaft (2) comprises two rows of seats (11), and the flange (8) comprises two lateral lips (12), which are arranged on opposite sides of the flange (8) in a position corresponding to the respective rows of seats (11).

12. The method according to Claim 10 or Claim 11, wherein each seat (11) has a triangular cross section.

13. The method according to Claim 10 or Claim 11 or Claim 12, wherein the control shaft (2) is made of a first material and the flange (8) is made of a second material different from the first material.

14. The method according to Claim 13, wherein the second material is more malleable than the first material.

15. The method according to Claim 14, wherein the first material is steel and the second material is aluminium.

## Patentansprüche

1. Hydraulischer Aktuator (5) für einen Servomotor zum Schalten von Gängen, der mit einer Steuerwelle (2) versehen ist, wobei sich der hydraulische Aktuator (5), der die Steuerwelle (2) axial entlang seiner Mittelachse (3) verschiebt, in einer Position befindet, welche einem Zwischenabschnitt der Steuerwelle (2) entspricht, und zwei Kammern (7) aufweist, die alternativ mit einer Druckflüssigkeit zur axialen Bewegung der Steuerwelle (2) in die beiden Richtungen gefüllt sind, von der Steuerwelle (2) durchquert werden, in Reihe entlang der Steuerwelle (2) angeordnet sind und durch einen Flansch (8) voneinander getrennt sind, der an der Steuerwelle (2) befestigt ist und einen Kolben des hydraulischen Aktuators (5) bildet, wobei der hydraulische Aktuator (5) **dadurch gekennzeichnet ist, dass**
der Flansch (8) unabhängig von der Steuerwelle (2) ist und an der Steuerwelle (2) befestigt ist;
die Steuerwelle (2) mindestens eine Reihe von Aufnahmen (11) besitzt, die gleichmäßig entlang einem Umfang und um die Mittelachse (3) der Steuerwelle (2) herum verteilt sind; und der Flansch (8) mindestens eine seitliche Nase (12) aufweist, die über der Reihe von Aufnahmen (11) angeordnet ist und in eine Position verformt ist, die jeder Aufnahme (11) entspricht, um in die Aufnahme (11) einzugreifen.

2. Hydraulischer Aktuator (5) nach Anspruch 1, wobei die Steuerwelle (2) zwei Reihen von Aufnahmen (11) besitzt und der Flansch (8) zwei seitliche Nasen (12) besitzt, die auf gegenüberliegenden Seiten des Flansches (8) in einer Position angeordnet sind, die den jeweiligen Reihen von Aufnahmen (11) entspricht.

3. Hydraulischer Aktuator (5) nach Anspruch 1 oder Anspruch 2, wobei jede Aufnahme (11) einen dreieckigen Querschnitt aufweist.

4. Hydraulischer Aktuator (5) nach Anspruch 1 oder Anspruch 2 oder Anspruch 3, wobei jede seitliche Nase (12) Einkerbungen (13) besitzt, die parallel zu der Mittelachse (3) der Steuerwelle (2) angeordnet sind.

5. Hydraulischer Aktuator (5) nach einem der Ansprüche 1 bis 4, wobei die Steuerwelle (2) aus einem ersten Werkstoff hergestellt ist und der Flansch (8) aus einem zweiten Werkstoff hergestellt ist, der sich von dem ersten Werkstoff unterscheidet.

6. Hydraulischer Aktuator (5) nach Anspruch 5, wobei der zweite Werkstoff verformbarer ist als der erste Werkstoff.

7. Hydraulischer Aktuator (5) nach Anspruch 6, wobei es sich bei dem ersten Werkstoff um Stahl und bei dem zweiten Werkstoff um Aluminium handelt.

8. Hydraulischer Aktuator (5) nach einem der Ansprüche 1 bis 7, wobei jede seitliche Nase (12) eine Stärke, gemessen in einer Richtung senkrecht zu der Mittelachse (3) der Steuerwelle (2), zwischen 0,5 und 1,0 mm besitzt, und eine Länge, gemessen in einer Richtung parallel zu der Mittelachse (3) der Steuerwelle (2), zwischen 0,5 und 1,0 mm besitzt.

9. Hydraulischer Aktuator (5) nach einem der Ansprüche 1 bis 8, wobei der Flansch (8) einen mittleren, ringförmigen Hohlraum (9) besitzt, der dazu dient, eine ringförmige Dichtung (10) aufzunehmen.

10. Herstellungsverfahren für einen hydraulischen Aktuator (5) für einen Servomotor zum Schalten von Gängen, der mit einer Steuerwelle (2) versehen ist, wobei sich der hydraulische Aktuator (5), der die Steuerwelle (2) axial entlang seiner Mittelachse (3) verschiebt, in einer Position befindet, welche einem Zwischenabschnitt der Steuerwelle (2) entspricht, und zwei Kammern (7) aufweist, die alternativ mit einer Druckflüssigkeit zur axialen Bewegung der Steuerwelle (2) in die beiden Richtungen gefüllt sind, von der Steuerwelle (2) durchquert werden, in Reihe entlang der Steuerwelle (2) angeordnet sind und durch einen Flansch (8) voneinander getrennt sind, der an der Steuerwelle (2) befestigt ist und einen Kolben des hydraulischen Aktuators (5) bildet; das Verfahren ist **dadurch gekennzeichnet, dass** es die nachfolgenden Schritte aufweist:
Herstellen der Steuerwelle (2) getrennt von dem Flansch (8) ;
Herstellen von mindestens einer Reihe von Aufnahmen (11) in der Steuerwelle (2), die gleichmäßig entlang einem Umfang und um die Mittelachse (3) der Steuerwelle (2) herum verteilt sind;
Herstellen des Flansches (8) getrennt von der Steuerwelle (2) und Versehen des Flansches mit mindestens einer seitlichen Nase (12);
Befestigen des Flansches (8) an der Steuerwelle (2), so dass sich die seitliche Nase (12) des Flansches (8) über der Reihe von Aufnahmen (11) an der Steuerwelle (2) befindet; und
Verformen der seitlichen Nase (12) des Flansches (8) in eine Position, die jeder Aufnahme (11) entspricht, um in die Aufnahme (11) einzugreifen.

11. Verfahren nach Anspruch 10, wobei die Steuerwelle (2) zwei Reihen von Aufnahmen (11) besitzt, und der Flansch (8) zwei seitliche Nasen (12) aufweist, die auf gegenüberliegenden Seiten des Flansches (8) in einer Position angeordnet sind, die den jeweiligen Reihen der Aufnahmen (11) entspricht.

12. Verfahren nach Anspruch 10 oder Anspruch 11, wobei jede Aufnahme (11) einen dreieckigen Querschnitt besitzt.

13. Verfahren nach Anspruch 10 oder Anspruch 11 oder Anspruch 12, wobei die Steuerwelle (2) aus einem ersten Werkstoff hergestellt ist, und der Flansch (8) aus einem zweiten Werkstoff hergestellt ist, der sich von dem ersten Werkstoff unterscheidet.

14. Verfahren nach Anspruch 13, wobei der zweite Werkstoff verformbarer ist als der erste Werkstoff.

15. Verfahren nach Anspruch 14, wobei es sich bei dem ersten Werkstoff um Stahl und bei dem zweiten Werkstoff um Aluminium handelt.

## Revendications

1. Actionneur hydraulique (5) pour un servodispositif appartenant à un changement de vitesse, comportant une tige de commande (2) ; l'actionneur hydraulique (5) déplaçant la tige de commande (2) axialement le long d'un axe central (3) de cette tige, étant monté dans une position qui correspond à une partie intermédiaire de la tige de commande (2) et ayant deux chambres (7) qui sont alternativement remplies d'un fluide sous pression pour déplacer la tige de commande (2) axialement dans les deux sens, sont traversées par la tige de commande (2), sont disposées en série le long de la tige de commande (2) et sont séparées l'une de l'autre par une embase (8) qui est fixée à la tige de commande (2) et qui définit un piston de l'actionneur hydraulique (5), l'actionneur (5) est **caractérisé en ce que**
l'embase (8) est indépendante de la tige de commande (2) et elle est montée sur la tige de commande (2) ;
la tige de commande (2) comprend au moins une rangée d'alvéoles (11) qui sont uniformément répartis le long d'une circonférence et autour de l'axe central (3) de la tige de commande (2) ; et l'embase (8) comprend au moins une lèvre latérale (12) qui est placée au-dessus de la rangée d'alvéoles (11) et est déformée dans une position correspondant à chaque alvéole (11) de manière à coopérer avec l'alvéole (11).

2. Actionneur hydraulique (5) selon la revendication 1, dans lequel la tige de commande (5) comprend deux rangées d'alvéoles (11) et l'embase (8) comprend deux lèvres latérales (12) qui sont disposées sur des côtés opposés de l'embase (8) dans une position correspondant aux rangées d'alvéoles (11) respectives.

3. Actionneur hydraulique (5) selon la revendication 1 ou la revendication 2, dans lequel chaque alvéole (11) a une section transversale triangulaire.

4. Actionneur hydraulique (5) selon la revendication 1 ou la revendication 2 ou la revendication 3, dans lequel chaque lèvre latérale (12) présente des encoches (13) disposées parallèlement à l'axe central (3) de la tige de commande (2).

5. Actionneur hydraulique (5) selon une quelconque des revendications 1 à 4, dans lequel la tige de commande (2) est faite d'une première matière et l'embase (8) est faite d'une seconde matière différente de la première matière.

6. Actionneur hydraulique (5) selon la revendication 5, dans lequel la seconde matière est plus malléable que la première matière.

7. Actionneur hydraulique (5) selon la revendication 6, la première matière est de l'acier et la seconde matière est de l'aluminium.

8. Actionneur hydraulique (5) selon une quelconque des revendications 1 à 7, dans lequel chaque lèvre latérale (12) a une épaisseur, mesurée dans une direction perpendiculaire à l'axe central (3) de la tige de commande (2), comprise entre 0,5 et 1,0 mm et a une longueur, mesurée dans une direction parallèle à l'axe central (3) de la tige de commande (2), comprise entre 0,5 et 1,0 mm.

9. Actionneur hydraulique (5) selon une quelconque des revendications 1 à 8, dans lequel l'embase (8) comprend une cavité annulaire centrale (9) conçue pour recevoir une garniture d'étanchéité annulaire (10).

10. Procédé de production d'un actionneur hydraulique (5) pour un servodispositif appartenant à un changement de vitesse, comportant une tige de commande (2), l'actionneur hydraulique (5) déplaçant la tige de commande (2) axialement le long d'un axe central (3) de cette tige, étant monté dans une position qui correspond à une partie intermédiaire de la tige de commande (2) et ayant deux chambres (7) qui sont alternativement remplies d'un fluide sous pression pour déplacer la tige de commande (2) axialement dans les deux sens, sont traversées par la tige de commande (2), sont disposées en série sur la longueur de la tige de commande (2) et sont séparées l'une de l'autre par une embase (8) qui est fixée à la tige de commande (2) et qui définit un piston de l'actionneur hydraulique (5) ;
le procédé est **caractérisé en ce qu'**il comprend les étapes consistant à :
fabriquer la tige de commande (2) séparément de l'embase (8) ; former dans la tige de commande (2) au moins une rangée d'alvéoles (11) qui sont uniformément répartis le long d'une circonférence et autour de l'axe central (3) de la tige de commande (2) ;
fabriquer l'embase (8) séparément de la tige de commande (2) et la munir d'au moins une lèvre latérale (12) ;
monter l'embase (8) sur la tige de commande (2) de manière à placer la lèvre latérale (12) de l'embase (8) au-dessus de la rangée d'alvéoles (11) de la tige de commande (2) ; et
déformer la lèvre latérale (12) de l'embase (8) dans une position correspondant à chaque alvéole (11) de manière à coopérer avec l'alvéole (11).

11. Procédé selon la revendication 10, dans lequel la tige de commande (2) comprend deux rangées d'alvéoles (11) et l'embase (8) comprend deux lèvres latérales (12) qui sont disposées sur des côtés opposés de l'embase (8), dans une position qui correspond aux rangées respectives d'alvéoles (11).

12. Procédé selon la revendication 10 ou la revendication 11, dans lequel chaque alvéole (11) a une section triangulaire.

13. Procédé selon la revendication 10 ou la revendication 11 ou la revendication 12, dans lequel la tige de commande (2) est faite d'une première matière et l'embase (8) est faite d'une seconde matière différente de la première matière.

14. Procédé selon la revendication 13, dans lequel la seconde matière est plus malléable que la première matière.

15. Procédé selon la revendication 14, dans lequel la première matière est de l'acier et la seconde matière est de l'aluminium.
